**Europäisches Patentamt**

**European Patent Office**

**Office européen des brevets**

(19)

(11) Veröffentlichungsnummer : **0 440 877 B1**

(12)

# EUROPÄISCHE PATENTSCHRIFT

(45) Veröffentlichungstag der Patentschrift :
**10.11.93 Patentblatt 93/45**

(51) Int. Cl.⁵ : **C04B 41/84,** B44F 9/10,
A47G 19/00, C03C 17/10

(21) Anmeldenummer : **90115899.8**

(22) Anmeldetag : **20.08.90**

(54) **Glanzedelmetallpräparat.**

(30) Priorität : **08.02.90 DE 4003796**

(43) Veröffentlichungstag der Anmeldung :
**14.08.91 Patentblatt 91/33**

(45) Bekanntmachung des Hinweises auf die
Patenterteilung :
**10.11.93 Patentblatt 93/45**

(84) Benannte Vertragsstaaten :
**DE ES FR GB IT**

(56) Entgegenhaltungen :
**DE-A- 1 421 865**
**DE-C- 3 721 000**
**DE-C- 3 736 583**
**DE-C- 3 809 541**
**US-A- 4 418 099**

(73) Patentinhaber : **W.C. Heraeus GmbH**
**Heraeusstrasse 12 - 14**
**D-63450 Hanau (DE)**

(72) Erfinder : **Göbel, Wolfgang**
**Salisweg 57**
**D-6450 Hanau (DE)**
Erfinder : **Landgraf, Günter, Dr.**
**Willstätter-Strasse 20**
**D-6450 Hanau (DE)**

(74) Vertreter : **Kühn, Hans-Christian**
**Heraeus Holding GmbH, Stabsstelle**
**Schutzrechte, Heraeusstrasse 12-14**
**D-63450 Hanau (DE)**

EP 0 440 877 B1

## Beschreibung

Die Erfindung betrifft ein Glanzedelmetallpräparat zum Einbrennen auf silicatischem Geschirr aus einer oder mehreren organischen Edelmetallverbindungen, einem Flußmittel aus organischen Metallverbindungen und einem organischen Träger, ein Verfahren zur Herstellung von Edelmetall-Dekorationen und die Anwendung des Glanzedelmetallpräparats.

Glanzedelmetallpräparate für die Dekoration von Glas, Keramik und Porzellan, wie Glanzgold, Glanzplatin und Glanzpalladium, bestehen aus Lösungen von organischen Gold-, Platin- und Palladiumverbindungen, meist der Sulforesinate, in organischen Träger-Medien, die beim Brand restlos verbrennen oder verdampfen, und enthalten üblicherweise noch andere lösliche organische Metallverbindungen, beispielsweise die Resinate beziehungsweise Sulforesinate von Rhodium, Wismut, Silber und Silicium. Die Präparate werden auf den zu dekorierenden Gegenstand aufgetragen und bei Temperaturen zwischen 500 und 850° C eingebrannt. Die auf diese Weise erzeugten Edelmetall-Dekorationen kommen glänzend aus dem Ofen und brauchen daher - anders als die mit Polieredelmetallpräparaten erhaltenen Dekorationen - nachträglich nicht poliert zu werden.

Ein zur Verwendung für die Herstellung von Edelmetall-Dekorationen auf silicatischem Geschirr, das in Mikrowellenherden benutzt werden kann, geeignetes Glanzedelmetallpräparat wird in der deutschen Patentschrift 37 21 000 beschrieben. Kennzeichen dieses Präparats ist ein relativ hoher Unedelmetall-Gehalt von 10 - 40 Gewichts-%, bezogen auf den Gesamtmetall-Gehalt des Präparats. Die Edelmetalle und Unedelmetalle liegen vorzugsweise als Resinate oder Sulforesinate vor. Als Beispiele für geeignete Unedelmetallresinate und -sulforesinate - auch als lösliche Flußmittel bezeichnet - werden die von Aluminium, Antimon, Barium, Wismut, Bor, Calcium, Cer, Chrom, Kobalt, Silicium, Germanium, Tantal, Zinn, Titan, Zink und Zirkonium genannt.

Die deutsche Patentschrift 37 36 583 betrifft ebenfalls die Verwendung von Glanzedelmetallpräparaten für mikrowellenbeständige Dekore auf Geschirrteilen aus silicatischen Werkstoffen. Die Glanzedelmetallpräparate bestehen aus einer Organogoldverbindung, gegebenenfalls in Mischung mit Organosilber-, Organopalladium- und/oder Organoplatinverbindungen, einem organischen Träger und einem sich aus organischen Metallverbindungen zusammensetzenden und eine organische Siliciumverbindung mit drei hydrolysierbaren Gruppen am Siliciumatom enthaltenden Flußmittel und werden bei 820° C eingebrannt.

Aus der deutschen Patentschrift 38 09 541 sind Glanzedelmetallpräparate bekannt, die oberhalb des Goldschmelzpunktes, günstigerweise bei etwa 1250° C, auf Geschirrteilen aus silicatischen Werkstoffen eingebrannt werden können. Das in dem Präparat enthaltene Flußmittel setzt sich aus einer organischen Siliciumverbindung mit drei und/oder vier hydrolysierbaren Gruppen am Siliciumatom und weiteren organischen Metallverbindungen zusammen.

Das unter Verwendung der bekannten mikrowellenbeständigen Glanzedelmetallpräparate dekorierte Geschirr kann ohne jede Gefahr in Mikrowellenöfen benutzt werden. Die Edelmetall-Dekorationen weisen jedoch einen im Vergleich zur hellen Gold-, Platin- und Palladiumfarbe ins Bräunliche beziehungsweise Schwärzliche verschobenen Farbton und einen geringeren Glanz auf.

Es ist daher die Aufgabe der Erfindung, ein Glanzedelmetallpräparat der eingangs charakterisierten Art zu finden, mit dem sich gegenüber der Wirkung von Mikrowellen beständige Edelmetall-Dekorationen in Farbtönen erzeugen lassen, die dem jeweiligen Edelmetall eigen sind.

Das die Lösung der Aufgabe darstellende Glanzedelmetallpräparat ist erfindungsgemäß dadurch gekennzeichnet, daß das Flußmittel eine organische Nickelverbindung enthält und, bezogen auf den Gesamtmetall-Gehalt des Präparats, der Nickel-Gehalt 2 - 8 Gewichts-% und der Edelmetall-Gehalt 70 - 90 Gewichts-% beträgt.

Vorzugsweise beträgt der Nickel-Gehalt des Glanzedelmetallpräparats 2 - 6 Gewichts-% und der Edelmetall-Gehalt 75 - 85 Gewichts-%.

Für das Glanzedelmetallpräparat haben sich als organische Nickelverbindungen Nickelresinate, Nickelsalze aliphatischer und aromatischer Carbonsäuren, zum Beispiel Nickeloctanoat, und Nickelkomplexe mit aliphatischen Diketonen, zum Beispiel Nickelacetylacetonat, oder eine Mischung dieser Verbindungen besonders bewährt.

Das Flußmittel kann aus einem Gemisch der Nickelverbindung mit anderen für diesen Zweck üblichen organischen Metallverbindungen bestehen.

Als besonders vorteilhaft hat sich das Glanzedelmetallpräparat jedoch erwiesen, wenn das Flußmittel die Nickelverbindung zusammen mit organischen Verbindungen des Aluminiums und/oder Chroms, die wie alle das Flußmittel bildenden organischen Metallverbindungen in dem organischen Träger löslich sein müssen, enthält. Geeignete Verbindungen stellen beispielsweise die Resinate, Carboxylate und Alkoholate dar.

Bezogen auf den Gesamtmetall-Gehalt des Präparats beträgt der Aluminium-Gehalt 0,5 - 5 Gewichts-%, vorzugsweise 1 - 3 Gewichts-%, und der Chrom-Gehalt 2 - 8 Gewichts-%, vorzugsweise 3 - 6 Gewichts-%.

Der organische Träger ist eine Mischung aus organischen Lösungsmitteln, ätherischen Ölen, Harzen und

2

dergleichen, wie an sich für diesen Zweck bekannt und entsprechend der Art und Weise des Auftragens des Präparats ausgewählt.

Die aus dem Glanzedelmetallpräparat gemäß der Erfindung hergestellten Edelmetall-Dekorationen werden in Mikrowellenöfen nicht angegriffen. Sie besitzen den natürlichen Farbton des ihnen zugrundeliegenden Edelmetalls und den diesem eigenen Glanz und unterscheiden sich in ihrer ästhetischen Wirkung nicht von aus herkömmlichen Glanzedelmetallpräparaten erzeugten Dekorationen.

Überraschenderweise lassen sich Edelmetall-Dekorationen mit diesen Eigenschaften in dem für das Einbrennen des erfindungsgemäßen Glanzedelmetallpräparats möglichen weiten Bereich der Einbrenntemperaturen von etwa 600 bis etwa 1230° C erzeugen. Damit bietet sich die Möglichkeit, ein Glanzedelmetallpräparat für mikrowellenbeständige Edelmetall-Dekorationen gemeinsam mit Inglasurfarben, für die heute Einbrenntemperaturen von etwa 1180 - 1230° C bevorzugt werden, einzubrennen. Für diesen Zweck hat sich das Glanzedelmetallpräparat, dessen Flußmittel die Nickelverbindung zusammen mit der Chromverbindung enthält, als besonders geeignet erwiesen.

In der ein Verfahren zur Herstellung von mit edelmetallhaltigen Filmen überzogenen glaskeramischen Gegenständen betreffenden DE-A-1 421 865 werden in tabellarischer Form vierzig für dieses Verfahren geeignete flußerzeugende Elemente genannt, unter anderem auch Nickel. Bei der konkret beschriebenen nickelhaltigen Formulierung gemäß Beispiel 17 handelt es sich jedoch um ein Polieredelmetallpräparat mit sehr hohem Nickelanteil. Anregungen für die vorliegende Erfindung lassen sich der Patentschrift auch deshalb nicht entnehmen, weil der Mechanismus der Wirkung der flußerzeugenden Elemente beim Keramisieren als von dem ihrer üblichen flußerzeugenden Wirkung unterschiedlich angesehen wird.

Zur näheren Erläuterung werden in den folgenden Beispielen Glanzgoldpräparate gemäß der Erfindung und die Herstellung von auf Porzellan eingebrannten Gold-Dekorationen unter Verwendung dieser Präparate beschrieben.

Beispiel 1

Ein Glanzgoldpräparat aus

```
Goldsulforesinat, 54 % Au                      18,5 Gewichts-%
Rhodiumsulforesinat, 15 % Rh                    0,3 "
Siliciumresinat, gelöst in Pine-Öl, 6 % Si      4,0 "
Nickelresinat, 9 % Ni                           3,0 "
Wismutresinat, 6 % Bi                          20,0 "
Aluminiumalkoholat-Lösung, 3 % Al               5,0 "
geschwefeltem Terpentinöl                      10,0 "
Abietinsäure                                    8,0 "
Xylol                                          10,2 "
Pine-Öl                                        21,0 "
```

wird mit dem Pinsel auf zwei Porzellan-Teller aufgetragen. Einer der Teller wird bei 820° C, der andere bei 1060° C gebrannt.

Beispiel 2

Ein Glanzgoldpräparat aus

| | |
|---|---|
| Goldsulforesinat, 54 % Au | 18,5 Gewichts-% |
| Rhodiumsulforesinat, 15 % Rh | 0,5 " |
| Siliciumresinat, gelöst in Pine-Öl, 6 % Si | 3,0 " |
| Nickelresinat, 9 % Ni | 6,0 " |
| Chromresinat, 5 % Cr | 10,0 " |
| Wismutresinat, 6 % Bi | 10,0 " |
| geschwefeltem Terpentinöl | 8,0 " |
| Phenolharz | 7,0 " |
| Pine-Öl | 25,0 " |
| Toluol | 12,0 " |

wird mit dem Pinsel auf einen Porzellan-Teller aufgetragen und bei 1200° C eingebrannt.

Beispiel 3

Ein Glanzgoldpräparat aus

| | |
|---|---|
| Goldsulforesinat, 54 % Au | 16,7 Gewichts-% |
| Rhodiumsulforesinat, 15 % Rh | 0,5 " |
| Siliciumresinat, gelöst in Pine-Öl, 6 % Si | 3,5 " |
| Wismutresinat, 6 % Bi | 14,5 " |
| Nickelresinat, 9 % Ni | 5,0 " |
| Aluminiumalkoholat-Lösung, 3 % Al | 6,0 " |
| Geschwefeltes Dammarharz | 20,0 " |
| Lavendelöl | 20,7 " |
| hydriertem Rizinusöl | 3,0 " |
| Silicon-Entschäumer | 0,1 " |
| Cyclohexanol | 10,0 " |

wird im Siebdruckverfahren auf einen Porzellan-Teller aufgedruckt und bei 820° C eingebrannt.

Die auf den Tellern erzeugten Gold-Dekorationen sind hochglänzend und besitzen einen schönen gelbgoldenen Farbton.

Um die Beständigkeit der Dekorationen gegenüber Mikrowellen zu prüfen, werden die Teller mehrmals in einen Mikrowellenherd gestellt und unter Betriebsbedingungen bei einer Leistung von 700 Watt für 15 Minuten darin belassen. Die Dekorationen zeigen keinerlei Beschädigungen.

In den Beispielen wird das Glanzedelmetallpräparat direkt auf das zu dekorierende Geschirr aufgebracht. Die indirekte Übertragung des Präparats über Abziehbilder ist natürlich ebenso möglich.

## Patentansprüche

1. Glanzedelmetallpräparat zum Einbrennen auf silicatischem Geschirr aus einer oder mehreren organischen Edelmetallverbindungen, einem Flußmittel aus organischen Metallverbindungen und einem organischen Träger, dadurch gekennzeichnet, daß das Flußmittel eine organische Nickelverbindung enthält und, bezogen auf den Gesamtmetall-Gehalt des Präparats, der Nickel-Gehalt 2 - 8 Gewichts-% und der Edelmetall-Gehalt 70 - 90 Gewichts-% beträgt.

4

**2.** Glanzedelmetallpräparat nach Anspruch 1, dadurch gekennzeichnet, daß der Nickel-Gehalt 2 - 6 Gewichts-% beträgt.

**3.** Glanzedelmetallpräparat nach Anspruch 1 oder 2, dadurch gekennzeichnet, daß der Edelmetall-Gehalt 75 - 85 Gewichts-% beträgt.

**4.** Glanzedelmetallpräparat nach einem der Ansprüche 1 bis 3, dadurch gekennzeichnet, daß das Flußmittel eine organische Aluminiumverbindung enthält und, bezogen auf den Gesamtmetall-Gehalt des Präparats, der Aluminium-Gehalt 0,5 - 5 Gewichts-% beträgt.

**5.** Glanzedelmetallpräparat nach Anspruch 4, dadurch gekennzeichnet, daß der Aluminium-Gehalt 1 - 3 Gewichts-% beträgt.

**6.** Glanzedelmetallpräparat nach einem der Ansprüche 1 bis 5, dadurch gekennzeichnet, daß das Flußmittel eine organische Chromverbindung enthält und, bezogen auf den Gesamtmetall-Gehalt des Präparats, der Chrom-Gehalt 2 - 8 Gewichts-% beträgt.

**7.** Glanzedelmetallpräparat nach Anspruch 6, dadurch gekennzeichnet, daß der Chrom-Gehalt 3 - 6 Gewichts-% beträgt.

**8.** Verfahren zur Herstellung von mikrowellenbeständigen Edelmetall-Dekorationen auf silicatischem Geschirr durch Einbrennen eines Glanzedelmetallpräparats, dadurch gekennzeichnet, daß ein Glanzedelmetallpräparat, das, bezogen auf den Gesamtmetall-Gehalt, einen Nickel-Gehalt von 2 - 8 Gewichts-%, einen Chrom-Gehalt von 2 - 8 Gewichts-% und einen Edelmetall-Gehalt von 70 - 90 Gewichts-% aufweist, bei Temperaturen von etwa 1180 - 1230° C eingebrannt wird.

**9.** Anwendung des Glanzedelmetallpräparats nach Anspruch 6 oder 7 für die Herstellung von mikrowellenbeständigen Dekorationen auf silicatischem Geschirr durch Einbrennen des Präparats gemeinsam mit Inglasurfarben.


**Claims**

**1.** A bright precious metal preparation, for burning in on silicate table-ware, of one or more organic precious metal compounds, a fluxing agent of organic metal compounds and an organic carrier, characterised in that the fluxing agent contains an organic nickel compound and, in relation to the total metal content of the preparation, the nickel content amounts to 2 - 8 % by weight and the precious metal content 70 - 90 % by weight.

**2.** A bright precious metal preparation according to Claim 1, characterised in that the nickel content amounts to 2 - 6 % by weight.

**3.** A bright precious metal preparation according to Claim 1 or 2, characterised in that the precious metal content amounts to 75 - 85 % by weight.

**4.** A bright precious metal preparation according to one of Claims 1 to 3, characterised in that the fluxing agent contains an organic aluminium compound and, in relation to the total metal content of the preparation, the aluminium content amounts to 0.5 - 5 % by weight.

**5.** A bright precious metal preparation according to Claim 4, characterised in that the aluminium content amounts to - 3 % by weight.

**6.** A bright precious metal preparation according to one of Claims 1 to 5, characterised in that the fluxing agent contains an organic chromium compound and, in relation to the total metal content of the preparation, the chromium content amounts to 2 - 8 % by weight.

**7.** A bright precious metal preparation according to Claim 6, characterised in that the chromium content amounts to 3 - 6 % by weight.

**8.** A method for the production of microwave-resistant precious metal decorations on silicate table-ware by the burning in of a bright precious metal preparation, characterised in that a bright precious metal preparation which, in relation to the total metal content, has a nickel content of 2 - 8 % by weight, a chromium content of 2 - 8 % by weight and a precious metal content of 70 - 90 % by weight, is burnt in at temperatures of approximately 1180 -1230 C.

9. The application of the bright precious metal preparation according to Claim 6 or 7 for the production of microwave-resistant decorations on silicate table-ware by burning in the preparation together with inglaze colours.


## Revendications

1. Composition de métaux nobles brillants à cuire sur de la vaisselle à base de silicate, constituée d'un ou plusieurs composés de métaux nobles, d'un fondant constitué des composés organométalliques et d'un véhicule organique, caractérisé en ce que le fondant comprend un composé organique du nickel et que la teneur en nickel est de 2 à 8 % en poids et la teneur en métaux nobles est de 70 à 90 % en poids par rapport à la teneur totale en métaux de la composition.

2. Composition de métaux nobles brillants selon la revendication 1, caractérisée en ce que la teneur en nickel est de 2 à 6 % en poids.

3. Composition de métaux nobles brillants selon la revendication 1 ou 2, caractérisée en ce que la teneur en métaux nobles est de 75 à 85 % en poids.

4. Composition de métaux nobles brillants selon les revendications 1 à 3, caractérisée en ce que le fondant contient un composé organique de l'aluminium et que la teneur en aluminium est de 0,5 à 5 % en poids par rapport à la teneur totale en métaux de la composition.

5. Composition de métaux nobles brillants selon la revendication 4, caractérisée en ce que la teneur en aluminium est de 1 à 3 % en poids.

6. Composition de métaux nobles brillants selon l'une quelconque des revendications 1 à 5, caractérisée en ce que le fondant contient un composé organique du chrome et que la teneur en chrome est de 2 à 8 % en poids par rapport à la teneur totale en métaux de la composition.

7. Composition de métaux nobles brillants selon la revendication 6, caractérisée en ce que la teneur en chrome est de 3 à 6 % en poids.

8. Procédé de préparation de décorations en métaux nobles résistant aux micro-ondes sur de la vaisselle à base de silicate, par cuisson d'une composition de métaux nobles brillants, caractérisé en ce qu'une composition de métaux nobles brillants, qui présente une teneur en nickel de 2 à 8 % en poids, une teneur en chrome de 2 à 8 % en poids et une teneur en métaux nobles de 70 à 90 % en poids par rapport à la teneur totale en métaux de la composition, est cuite à des températures d'environ 1 180 à 1 230°C.

9. Utilisation de la composition de métaux nobles brillants selon la revendication 6 ou 7 pour la préparation de décorations résistant aux micro-ondes sur de la vaisselle à base de silicate par cuisson de la composition avec des couleurs à grand feu.